(19) Europäisches Patentamt
European Patent Office
Office européen des brevets

(11) EP 2 476 485 A1

(12) EUROPEAN PATENT APPLICATION

(43) Date of publication:
18.07.2012 Bulletin 2012/29

(51) Int Cl.:
B01J 23/44 (2006.01)
B01J 37/00 (2006.01)
B01J 37/08 (2006.01)
B01J 35/10 (2006.01)
B01J 35/00 (2006.01)
B01J 37/04 (2006.01)
B01J 37/18 (2006.01)
B01J 21/06 (2006.01)

(21) Application number: 11190808.3

(22) Date of filing: 25.11.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 12.01.2011 KR 20110003204

(71) Applicant: Samsung Electronics Co., Ltd
Suwon-si, Gyeonggi-do 442-742 (KR)

(72) Inventors:
• Ji, Sang Min
Gyeonggi-do (KR)

• Kim, Jae Eun
Seoul (KR)
• Lee, Hyun Chul
Gyeonggi-do (KR)
• Kang, Hyo Rang
Gyeonggi-do (KR)

(74) Representative: Zijlstra, Robert Wiebo Johan
Elkington and Fife LLP
Prospect House
8 Pembroke Road
Sevenoaks, Kent TN13 1XR (GB)

(54) **Photocatalyst, method of preparing the same, decomposer for organic compound using photocatalyst, and device for organic waste disposal using photocatalyst**

(57) A photocatalyst according to example embodiments may include a porous metal oxide and an oxygen vacancy-inducing metal. A portion of the oxygen vacancy-inducing metal may be included in a lattice of the porous metal oxide, while another portion may be exposed at the surface of the porous metal oxide. The porous metal oxide may be a divalent or multivalent metal oxide. The oxidation number of the oxygen vacancy-inducing metal may be smaller than the oxidation number of the metal of the porous metal oxide.

## FIG.1

EP 2 476 485 A1

**Description**

**BACKGROUND**

Example embodiments relate to a photocatalyst, a method of preparing the same, a decomposer for organic material including the photocatalyst, and a device for organic waste disposal using the photocatalyst.

Photocatalysts have been actively researched in various fields including the energy field (e.g., for hydrogen preparation through water splitting) and in environmental purification (e.g., organic material decomposition, sterilization). A photocatalyst may be applied to various fields due to its relatively strong oxidizing power and reducing power by virtue of its ability to convert light energy (e.g., solar light, artificial light), and many studies for commercialization thereof are in progress.

Particularly, a photocatalyst material may be used in an advanced oxidation process (AOP) for decomposing and treating various organic pollutants or various viruses and bacteria and the like in waste water, or environmental pollutants such as volatile organic compounds (VOC) using solar light energy, which is a representative new and renewable energy source. Recently, interest in studies for converting carbon dioxide ($CO_2$), which is a representative greenhouse gas (and believed to be a cause of global warming), to a chemical material or a fuel material using a photocatalyst material has been increasing. However, conventional photocatalyst materials have a relatively low photoconversion efficiency and reactivity.

**SUMMARY OF THE INVENTION**

Example embodiments of the present invention relate to a photocatalyst having improved oxidation decomposition performance.

Example embodiments of the present invention additionally relate to a method of manufacturing a photocatalyst having improved oxidation decomposition performance, the method involving relatively economical and simple manufacturing processes.

Example embodiments of the present invention also relate to a decomposer for an organic material including a porous metal oxide photocatalyst having desirable organic material decomposition performance.

Example embodiments of the present invention further relate to a device for organic waste disposal using the above photocatalyst having improved oxidation decomposition performance.

A photocatalyst according to example embodiments may include a porous metal oxide and an oxygen vacancy-inducing metal, wherein a portion of the oxygen vacancy-inducing metal is included within a lattice of the porous metal oxide and another portion one of the oxygen vacancy-inducing metal is exposed at the surface of the porous metal oxide, the porous metal oxide is a divalent or multivalent metal oxide, and the oxidation number of the oxygen vacancy-inducing metal is smaller than the oxidation number of the metal of the porous metal oxide.

The oxygen vacancy-inducing metal included within the lattice of the porous metal oxide may be in the form of a metal oxide, while the oxygen vacancy-inducing metal exposed at the surface of the porous metal oxide may be in the form of a metal.

The porous metal oxide may be a metal oxide of at least one metal selected from the group consisting of Group 4, Group 5, Group 6, Group 8, Group 11, Group 12, Group 13, Group 14, and Group 15 elements, while excluding boron, carbon, and nitrogen.

The porous metal oxide may be selected from $TiO_2$ $Nb_2O_5$, $Ta_2O_5$ $WO_3$, $Fe_2O_3$, ZnO, $SnO_2$, $Ce_xZr_{(1-x)}O_2$ ($0{\leq}x<1$), or a combination thereof.

The oxygen vacancy-inducing metal may be selected from Ti, V, Cr, Mn, Fe, Co, Ni, Cu, Zn, Ga, Ge, Zr, Nb, Ru, Rh, Pd, Ag, Cd, In, Sn, Ta, W, Ir, Pt, Au, Pb, Bi, or a combination thereof.

The amount of the oxygen vacancy-inducing metal included within the lattice of the porous metal oxide may be about 0.1 to about 20 parts by weight, based on 100 parts by weight of the porous metal oxide.

The amount of the oxygen vacancy-inducing metal exposed at the surface of the porous metal oxide may be about 0.05 to about 10 parts by weight, based on 100 parts by weight of the porous metal oxide.

The porous metal oxide may have mesopores of a size ranging from about 2 to about 50 nm.

The porous metal oxide may have a surface area of about 20 $m^2$/g to about 900 $m^2$/g.

According to example embodiments of the present invention, a method of manufacturing a photocatalyst may include calcining a mixed solution including a porous metal oxide precursor and an oxygen vacancy-inducing metal precursor to form a calcined product, and reducing the calcined product.

The method may include mixing the porous metal oxide precursor, the oxygen vacancy-inducing metal precursor, a structure-directing agent, and a solvent to prepare a mixed solution; drying the mixed solution to form a dried product; calcining the dried product to form a calcined product; and reducing the calcined product.

The porous metal oxide may be a divalent or multivalent metal oxide, and the oxidation number of the oxygen vacancy-inducing metal may be smaller than the oxidation number of the metal of the porous metal oxide.

The oxygen vacancy-inducing metal precursor may be an alkoxide, a halide, a nitrate, a hydrochloride, a sulfate, or an acetate of transition elements.

The porous metal oxide precursor may be an alkoxide, a halide, a nitrate, a hydrochloride, a sulfate, or an acetate of at least one metal selected from the group consisting of Group 4, Group 5, Group 6, Group 8, Group 11, Group 12, Group 13, Group 14, and Group 15 elements, while excluding boron, carbon, and nitrogen.

The structure-directing agent may be selected from a cationic surfactant, an anionic surfactant, a neutral surfactant, or a combination thereof.

The solvent may include a mixed solution of an alcohol and an acid aqueous solution.

The reduction process may be conducted at a temperature of about 300 to about 1000°C, for about 0.01 to about 10 hours, under a hydrogen atmosphere.

According to example embodiments of the present invention, a decomposer for an organic material including the above photocatalyst may be attained.

According to example embodiments of the present invention, a device for organic waste disposal including the above photocatalyst may also be attained.

## BRIEF DESCRIPTION OF THE DRAWINGS

FIG. 1 is a schematic view showing a photocatalyst according to example embodiments of the present invention.

FIG. 2 is a schematic view showing the action of a photocatalyst according to example embodiments of the present invention.

FIG. 3 is a graph showing XRD analysis results of the photocatalyst prepared in Example 1 and Comparative Examples 1 to 3.

FIG. 4 is a graph showing the measurement results of the temperatures where oxides are reduced to metals under a hydrogen atmosphere by temperature-programmed reduction (TPR) analysis in Example 1 and Comparative Example 3.

FIG. 5 is a graph showing isothermal adsorption-desorption curves of Example 1 and Comparative Example 2.

FIG. 6 is a graph showing the distribution of pore size in the photocatalysts of Example 1 and Comparative Example 2.

FIG. 7 is a graph showing decomposition removal rate calculated after measuring decomposition performance for a methylene blue aqueous solution of each photocatalyst prepared in Example 1 and Comparative Examples 1 to 3.

## DETAILED DESCRIPTION

It will be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification. As used herein, the term "and/or" includes any and all combinations of one or more of the associated listed items.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, e.g., "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms, "comprises," "comprising," "includes," and/or "including," if used herein, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art. It will be further understood that terms, including those defined in commonly used dictionaries, should be interpreted as having a meaning that is consistent with their meaning in the context of the relevant art and will not be interpreted in an idealized or overly formal sense unless expressly so defined herein.

Example embodiments will be described in further detail in the following description, in which some but not all embodiments of this disclosure are described. This disclosure may be embodied in many different forms and should not be construed as limited to the embodiments set forth herein.

A photocatalyst according to example embodiments may include porous metal oxides and an oxygen vacancy-inducing metal, wherein at least one oxygen vacancy-inducing metal is included within the lattice of the porous metal oxide, and another at least one oxygen vacancy-inducing metal is included in the porous metal oxides being partially exposed on the surface of the porous metal oxides.

The oxygen vacancy-inducing metal may be included within the lattice of the porous metal oxide by being substituted for the metal element of the porous metal oxide, or by being integrated interstitially in the lattice of porous metal oxides. In the photocatalyst, the structure of the lattice of the porous metal oxides may be maintained with the substitution of the oxygen vacancy-inducing metal for the metal element of the porous metal oxides, or with the interstitial integration of the oxygen vacancy-inducing metal in the porous metal oxide as explained above.

The metal of the porous metal oxide may be a divalent or multivalent metal.

The oxygen vacancy-inducing metal refers to a metal having a smaller oxidation number than the metal of the porous metal oxide. The oxygen vacancy-inducing metal included in the lattice of the porous metal oxide exists in the form of an oxide and may induce oxygen vacancy because the oxidation number of the oxygen vacancy-inducing metal is smaller than the oxidation number of the metal of the porous metal oxide. A local imbalance of electron bonds may be induced by the smaller oxidation number of the oxygen vacancy-inducing metal introduced in the porous metal oxides, thereby forming a partial oxygen vacancy. The oxygen vacancy may be generated with relative ease near the surface of the porous metal oxides.

The oxygen vacancy may adsorb water or oxygen and the like due to its property of attracting surrounding electrons, and the adsorbed water or oxygen may be oxidized to reactive oxygen species such as an OH radical, a super-oxygen anion ($O_2^-$), hydrogen peroxide ($H_2O_2$), and the like. The produced reactive oxygen species may odecompose various environmental pollutants generally consisting of organic materials by oxidation and remove them.

In the photocatalyst, the oxygen vacancy-inducing metal may induce an oxygen vacancy to produce reactive oxygen species while it is not substantially eluted from the photocatalyst.

The amount of the oxygen vacancy-inducing metal included within a lattice of the porous metal oxides may be about 0.1 to about 20 parts by weight, based on 100 parts by weight of the porous metal oxides.

The oxygen vacancy-inducing metal partially exposed on the surface of the porous metal oxides may originate from the oxygen vacancy-inducing metal included within a lattice of the porous metal oxides. In more detail, the oxygen vacancy-inducing metal partially exposed on the surface of the porous metal oxides may be formed by reducing the oxygen vacancy-inducing metal included within a lattice of the porous metal oxides existing near the surface of the porous metal oxides.

This is explained in further detail below in the method of manufacturing the photocatalyst. The oxygen vacancy-inducing metal included in the porous metal oxides being partially exposed on the surface of the porous metal oxides may exist in the form of a metal.

The amount of the oxygen vacancy-inducing metal included in the porous metal oxides being partially exposed on the surface of the porous metal oxides may be about 0.05 to about 10 parts by weight, based on 100 parts by weight of the porous metal oxides.

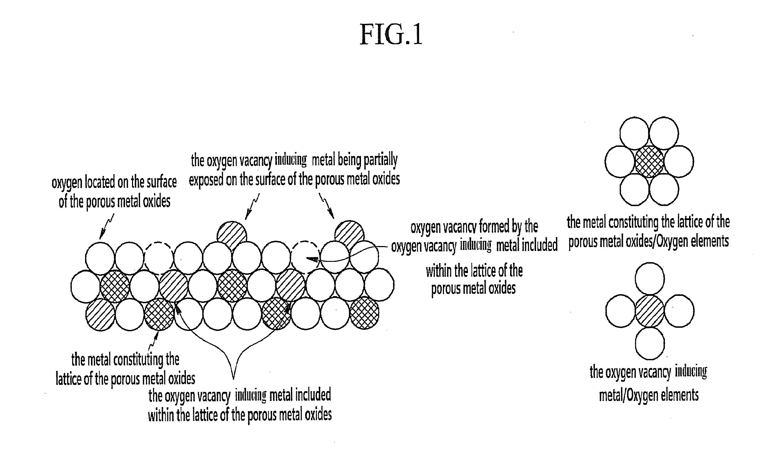

FIG. 1 is a schematic diagram showing a cross-section of a structure of a photocatalyst including porous metal oxides and oxygen vacancy-inducing metals.

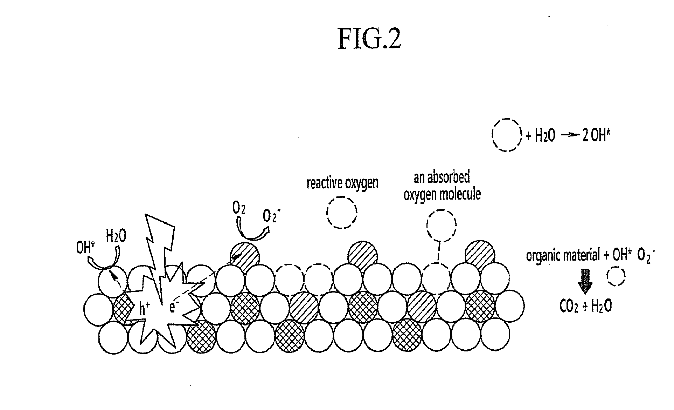

FIG. 2 is a schematic diagram showing the action of an oxygen vacancy-inducing metal according to its location in the photocatalyst having the above structure.

The photocatalyst photoelectrochemically absorbs optical energy to form excited electrons and holes. The excited electron moves to the surface to produce a super-oxygen anion ($O_2^-$) by a reduction reaction, while the hole moves to the surface to produce an OH radical (*OH) by an oxidation reaction. Particularly, the OH radical is known as a representative reactant (oxidizing agent) of an advanced oxidation process due to its relatively strong oxidizing power. Various environmental pollutants may be oxidized and decomposed and thus removed by various reactive oxygen species such as a hydroxide radical, a super-oxygen anion, and the like that are produced by the photocatalyst.

Thus, the more the produced reactive oxygen species there are, the more the photocatalyst reactivity (e.g., organic material decomposition performance) is improved. However, most of the excited electrons and holes formed in the photocatalyst may move to the surface and recombine with each other and disappear without participating in an oxidation/reduction reaction, which is referred to as a recombination and is a leading cause of deterioration of photocatalyst reactivity.

In the photocatalyst, the oxygen vacancy-inducing metal included in the porous metal oxides and partially exposed on the surface of the porous metal oxide acts as a co-catalyst to separate excited electrons and holes formed in the photocatalyst, thereby inhibiting recombination so as to produce more reactive oxygen species. Specifically, since the oxygen vacancy-inducing metal included in the porous metal oxides is partially exposed on the surface of the porous metal oxide so as to separate the electrons or holes, the oxygen vacancy-inducing metal may function as an electron trap or an active site that causes a surface reaction (oxidation/reduction). As a result, recombination of the excited electrons and holes may be suppressed so as to increase the production of reactive oxygen species and improve reactivity of the photocatalyst (e.g., an organic material decomposition performance).

When the photocatalyst is reduced under a reduction gas atmosphere, since the oxygen vacancy-inducing metal existing as an oxide forms a stable bond in the porous metal oxides, a higher reduction temperature is required than in the case when the oxygen vacancy-inducing metal is chemically and physically adsorbed on the surface of the porous oxides or when the oxygen vacancy-inducing metal is supported on the surface of the oxides by ion exchange. Furthermore, the temperature for reducing the oxygen vacancy-inducing metal in the photocatalyst may be varied according to the position where the oxygen vacancy-inducing metal is located in the porous metal oxides. For instance, an oxygen vacancy-inducing metal included within a lattice of the porous metal oxides is reduced at a higher temperature than an oxygen vacancy-inducing metal included in the porous metal oxides so as to be partially exposed on the surface of the porous metal oxide.

The metal of the porous metal oxide may be selected from a group consisting of Group 4, Group 5, Group 6, Group 8, Group 11, Group 12, Group 13, Group 14, and Group 15 elements, and a combination thereof, while excluding boron, carbon, and nitrogen. Specific examples of the metal of the porous metal oxide may include Ti, V, Zr, Nb, Mo, Sn, Ga, In, Ta, W, Bi, Ce, or a combination thereof. Specific examples of the porous metal oxide may include $TiO_2$, $Nb_2O_5$, $Ta_2O_5$, $WO_3$, $Fe_2O_3$, $ZnO$, $SnO_2$, $Ce_x$-$Zr_{(1-x)}O_2$ ($0 \leq x < 1$), or a combination thereof.

Specific examples of the oxygen vacancy-inducing metal may include Ti, V, Cr, Mn, Fe, Co, Ni, Cu, Zn, Ga, Ge, Zr, Nb, Ru, Rh, Pd, Ag, Cd, In, Sn, Ta, W, Ir, Pt, Au, Pb, Bi, or a combination thereof.

The porous metal oxide may have mesopores, thereby having a relatively large surface area and a relatively large pore volume. For example, the porous metal oxide may include mesopores having a size ranging from about 2 to about 50 nm. For example, the mesopores may range from about 2 to about 15 nm. Furthermore, the mesopores may have a surface area of about 20 $m^2$/g or more. For example, the mesopores may have a surface area ranging from about 40 to about 900 $m^2$/g.

Example embodiments of the present invention also relate to a decomposer including the above photocatalyst. The decomposer for an organic material may effectively decompose an organic material or environmental pollutants using the photocatalyst. The decomposer may further include other components that are capable of decomposing volatile organic compounds (VOC), but the additional components are not limited by these.

Specifically, the decomposer may be composed of the photocatalysts as a single component. Alternatively, the decomposer may be a composite compound in which the photocatalysts are combined with other support materials, photo-sensitizers, etc. The decomposer may also be a mixture including the photocatalysts according to any of the above-stated example embodiments and at least one decomposer compound selected from the group consisting of ozone, hydrogen peroxide, chloride, and chlorine dioxide.

With regard to the decomposer according to the aforementioned example embodiments, the photo-sensitizer is not limited by its materials if and when the materials are known to be conventionally used by being sensitized to visible rays. Likewise, the support materials are not limited if and when they are known to be conventionally used for the photocatalysts.

Example embodiments of the present invention also relate to a device for organic waste disposal including the above photocatalyst. An organic material or pollutants may be decomposed and removed by the device for organic waste disposal. According to a non-limiting example embodiment, the device for organic waste disposal including the above photocatalyst may include a photo-irradiator, an organic waste inlet, and an inlet for the decomposer. The decomposer may be composed of the photocatalyst or includes the photocatalyst. The organic waste that passes through the organic waste inlet may be in a liquid state or a gaseous state, and is not limited by the state.

The photocatalyst may be prepared by the following manufacturing method.

The manufacturing method of the photocatalyst may include calcining a mixed solution of a porous metal oxide precursor and an oxygen vacancy-inducing metal precursor, and reducing the calcined product.

The calcining of the mixed solution including a porous metal oxide precursor and an oxygen vacancy-inducing metal precursor may include mixing a porous metal oxide precursor, an oxygen vacancy-inducing metal precursor, a structure-directing agent, and a solvent to prepare a mixed solution; drying the mixed solution; calcining the dried product; and reducing the calcined product.

To prepare the above photocatalyst, the porous metal oxide may be a divalent or multivalent metal oxide, and the oxygen vacancy-inducing metal has a smaller oxidation number than the metal of the porous metal oxide.

The oxygen vacancy-inducing metal precursor may include an alkoxide, a halide, a nitrate, a hydrochloride, a sulfate, or an acetate and the like of transition elements such as Ti, V, Cr, Mn, Fe, Co, Ni, Cu, Zn, Ga, Ge, Zr, Nb, Ru, Rh, Pd, Ag, Cd, In, Sn, Ta, W, Ir, Pt, Au, Pb, Bi, and the like, but is not limited thereto.

The precursor of the porous metal oxide may include an alkoxide, a halide, a nitrate, a hydrochloride, a sulfate, or an acetate of at least one metal selected from Group 4, Group 5, Group 6, Group 8, Group 11, Group 12, Group 13, Group 14, and Group 15 elements, for example Ti, V, Zr, Nb, Mo, Sn, Ga, In, Ta, W, Bi, Ce, and the like (except boron, carbon, and nitrogen), but is not limited thereto.

The structure-directing agent provides a backbone for the metal oxide. Examples of the structure-directing agent may include a cationic surfactant, an anionic surfactant, a neutral surfactant, or a combination thereof. An example of the cationic surfactant may include cetytrimethylammonium bromide (CTAB). An example of the anionic surfactant may include sodium lauryl sulfate (SDS). An example of the neutral surfactant may include a polyethylene oxide/polypropylene oxide/polyethylene oxide (PEO/PPO/PEO) triblock copolymer.

The solvent for mixing the precursors is not particularly limited, with examples thereof including an alcohol-based solvent such as ethanol, and a mixed solvent thereof with an acid such as a hydrochloric acid aqueous solution, an acetic acid aqueous solution, and the like. The amount of the solvent may be about 0.1 to about 40 parts by weight, based on 100 parts by weight of the porous metal oxides precursor, but is not limited thereto.

The metal oxide precursor, the oxygen vacancy-inducing metal precursor, and the structure-directing agent may be mixed with the solvent to form a mixed solution, and the mixed solution may be agitated at room temperature for about 0.1 to about 10 hours to homogenize each component.

The mixed solution is dried, and the dried product is calcined.

The drying process of the mixed solution may be conducted, for example, by natural evaporation at room temperature and atmospheric pressure. Specifically, the mixed solution may be allowed to stand at room temperature (about 25°C) and atmospheric pressure for about 1 to about 100 hours while being open to remove volatile solvent components included in the mixed solution. The standing time is not specifically limited as long as it may remove the volatile solvent component. A product obtained after removing the solvent component may be aged, if necessary, and the aging process, which is to increase the bonding degree between atoms, may be conducted at about 30 to about 100°C for about 6 to about 48 hours in the presence of atmospheric air.

The dried or aged product is calcined so that each precursor may be converted into an oxide. Specifically, porous metal oxides including an oxygen vacancy-inducing metal within the lattice of the porous metal oxides may be prepared by the calcination process, wherein the porous metal oxides forms a structure of mesopores, and the oxygen vacancy-inducing metal is substituted for the metal element of the porous metal oxides or integrated interstitially in the lattice of the porous metal oxides.

The calcination process may be conducted in the atmosphere at a temperature ranging from about 300 to about 1000°C (e.g., about 350 to about 600°C) for about 0.1 to about 30 hours (e.g., about 1 to about 10 hours).

As explained above, the manufacturing method involves a one-step synthesis (instead of a multi-step synthesis) and adds a precursor of a porous metal oxide simultaneously with a precursor of an oxygen vacancy-inducing metal to introduce an oxygen vacancy-inducing metal into the backbone of the porous metal oxide.

The oxygen vacancy-inducing metals existing near the surface of the porous metal oxides may be reduced by a reduction process so as to be partially exposed on the surface of the porous metal oxides. As a result, the photocatalyst may include the oxygen vacancy-inducing metal within the lattice of the porous metal oxides as well as at the surface of the porous metal oxides so as to be partially exposed.

The reduction process may be conducted at a temperature ranging from about 100 to about 1000°C (e.g., about 300 to about 500°C) for about 0.01 to about 10 hours (e.g., about 0.1 to about 5 hours) under a hydrogen atmosphere. Furthermore, the temperature may be raised at a speed of about 0.5 to about 20°C/min (e.g., about 2 to about 10°C/min).

Hereinafter, various non-limiting embodiments are discussed in further detail with reference to the following examples. However, it should be understood that the following are merely examples and should not be construed in a limiting manner.

(Example)

Example 1: Preparation of mesoporous Pd/PdO (2wt%)-TiO$_2$

About 4.6 g of a triblock copolymer (Pluronic F127, EO-PO-EO, MW=12,000) as a structure-directing agent, about 1.97 mL of HCl (36 wt%), and about 2.4 g of acetic acid are introduced into 30 mL of ethanol at room temperature and dissolved while agitating to prepare a uniform mixed solution. About 0.41 mmol of Pd(NO$_3$)$_2$ is added as a Pd precursor to the solution and completely dissolved, then about 25 mmol of titanium butoxide (Ti[O(CH$_2$)$_3$CH$_3$]$_4$) is introduced as a Ti precursor and dissolved, and the mixture is vigorously agitated for about 5 hours. The solution is put in a Petri dish and allowed to stand at room temperature and atmospheric pressure for about 48 hours in the air to naturally evaporate the ethanol solvent, and is then aged at about 65°C for about 12 hours in the air. Next, the solution is baked at about 400°C for about 5 hours in the air to obtain PdO (2wt%)-TiO$_2$ powder, which is then introduced into a tubular reactor completely free of air, and reduced at about 350°C for about 3 hours while flowing hydrogen gas. The metal ratio of the obtained catalyst is Ti:Pd = about 98: about 2, and the amount of Pd insertion is about 2 wt% of the entire mass.

Comparative Example 1: Preparation of mesoporous PdO (2wt%)-TiO$_2$

About 4.6g of a triblock copolymer (Pluronic F127, EO-PO-EO, MW=12,000) as a structure-directing agent, about 1.97 mL of HCl (36 wt%), and about 2.4 g of acetic acid are introduced into 30 mL of ethanol at room temperature, and dissolved while agitating to prepare a uniform mixed solution. About 0.41 mmol of Pd(NO$_3$)$_2$ is added to the solution as a Pd precursor and completely dissolved, then about 25 mmol of titanium butoxide (Ti[O(CH$_2$)$_3$CH$_3$]$_4$) is introduced as a Ti precursor, and the mixture is vigorously agitated for about 5 hours. The solution is put in a Petri dish and allowed to stand at atmospheric pressure for about 48 hours in the air to naturally evaporate an ethanol solvent, and then the solution is aged at about 65°C for about 12 hours in the air. Next, the solution is baked at about 400°C for about 5 hours in the air. The metal ratio of the obtained catalyst is Ti:Pd = about 98: about 2, and the amount of Pd insertion is about 2 wt% of the entire mass.

Comparative Example 2: Preparation of mesoporous TiO$_2$

About 4.6g of a triblock copolymer (Pluronic F127, EO-PO-EO, MW=12,000) as a structure-directing agent, about 1.97 mL of HCl (36 wt%), and about 2.4 g of acetic acid are introduced into 30 mL of ethanol at room temperature, and dissolved while agitating to prepare a uniform mixed solution. About 25 mmol of titanium butoxide (Ti[O(CH$_2$)$_3$CH$_3$]$_4$) is added to the solution as a Ti precursor and dissolved, and then the mixture is vigorously agitated for about 5 hours. The solution is put in a Petri dish and allowed to stand at atmospheric pressure for about 48 hours in the air to naturally evaporate an ethanol solvent, and then the solution is aged at about 65°C for about 12 hours in the air. Next, the solution is baked at about 400°C for about 5 hours in the air.

Comparative Example 3: Pd (2wt%)/mesoporous TiO$_2$ with surface supported Pd

Pd (palladium) is supported on the mesoporous TiO$_2$ powder synthesized in Comparative Example 2 by impregnation. Next, it is baked at about 300°C for about 2 hours, and then, reduced at about 350°C for about 1 hour under a hydrogen gas atmosphere. The amount of supported Pd is about 2 wt% of the entire mass.

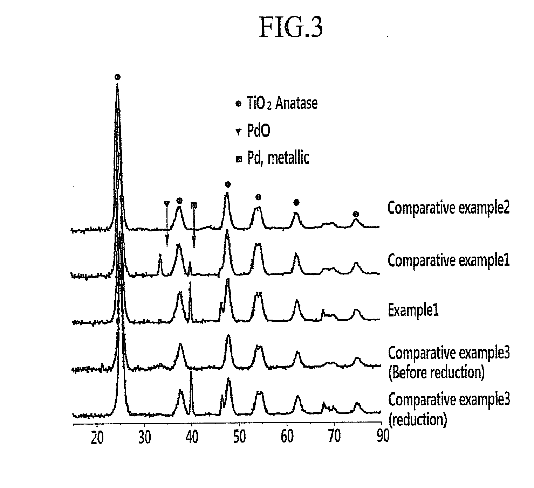

FIG. 3 is a graph showing XRD analysis results of the photocatalysts prepared in the Example 1 and Comparative Examples 1 to 3. The oxygen vacancy-inducing metal included in the lattice of the porous metal oxide exists as an oxide, and among the oxygen vacancy-inducing metal in the form of an oxide, only those existing near the surface of the porous metal oxide may be detected by XRD analysis. The PdO peak of Comparative Example 1 in Fig. 3 is due to the oxygen vacancy-inducing metal in the form of an oxide included in the porous metal oxide lattice, existing near the surface of the porous metal oxide. In Comparative Example 1, if a reduction process is further conducted, the PdO detected as the PdO peak may be partially exposed on the surface of the porous metal oxide. Further, it is confirmed that the PdO peak disappears and the Pd peak strongly appears in the XRD peak of Example 1 in FIG. 3, wherein a reduction process is further conducted in Comparative Example 1.

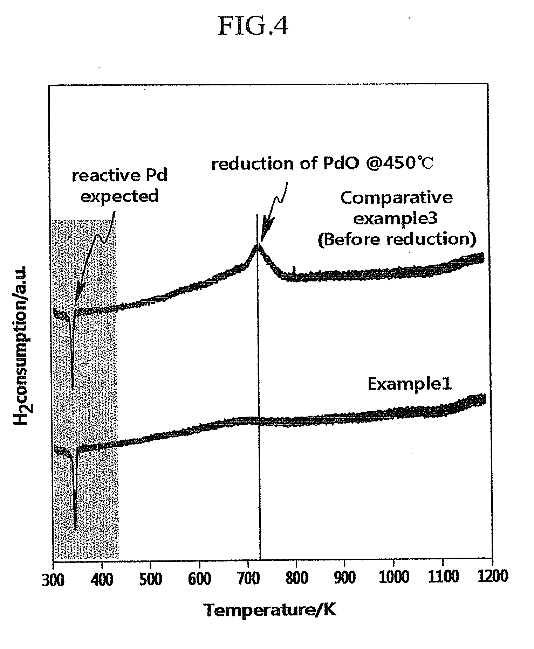

FIG. 4 is a graph showing the measurement results of the temperatures where oxides are reduced to metals under a hydrogen atmosphere by TPR (temperature-programmed reduction) analysis in Example 1 and Comparative Example 3. In Comparative Example 3 wherein Pd (existing as PdO) is supported on the TiO$_2$ surface, the PdO is reduced to Pd. In Example 1, since Pd (existing as Pd) included in the TiO$_2$ lattice maintains stable bonds with the surrounding lattice metal and oxygen atoms, the reduction peak does not appear.

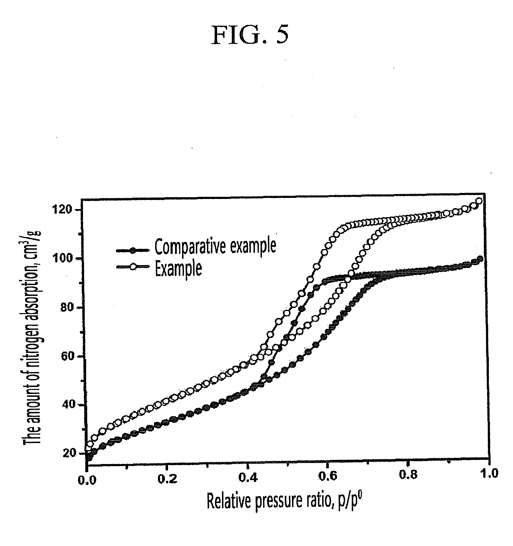

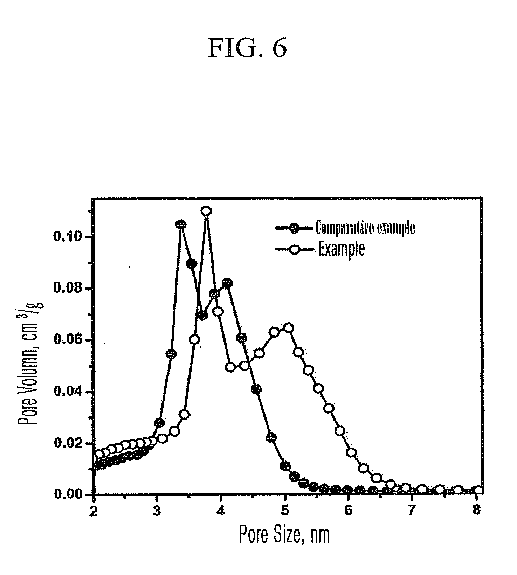

FIG. 5 shows isothermal adsorption-desorption curves of Example 1 and Comparative Example 2, and pressure change at 176°C below zero is measured to analyze adsorption-desorption characteristics of nitrogen gas, thereby calculating pore size and distribution. FIG. 6 is a graph showing the distribution of pore size in the photocatalyst of Example 1 and Comparative Example 2, which may be measured using a surface area and porosity analyzer, for example TriStar-3000 from Micromeritics Corporation. In FIG. 5 and FIG. 6, Example 1 and Comparative Example 2 show similar patterns. This means that Example 1 maintains the Ti lattice and mesopores of Comparative Example 2 which does not include Pd. Further, it is confirmed that the surface area and pore volume increase in Example 1.

The surface area and pore volume of Example 1 and Comparative Example 2 are measured using the TriStar-3000 from Micromeritics Corporation, and are shown in the following Table 1.

(Table 1)

|  | BET surface area ($m^2$/g) | Pore size (nm) | Total pore volume ($cm^3$/g) |
| --- | --- | --- | --- |
| Example 1 | 166.64 | 3.44-4.6 | 0.2027 |
| Comparative Example 2 | 119.52 | 3.39-4.1 | 0.1494 |

Experimental Example 1

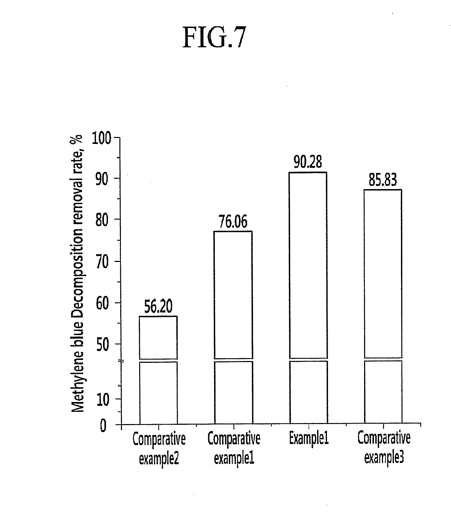

About 0.06 mL of a blue dye methylene blue (product name: Methylene Blue solution, manufacturing company: SIGMA-ALDRICH) is mixed with about 30 mL of distilled water to prepare a methylene blue aqueous solution, and then the decomposition performance is measured using each photocatalyst prepared in Example 1 and Comparative Examples 1 to 3. About 0.05 g of each photocatalyst is introduced into the methylene blue aqueous solution, light of about 350 nm or more is irradiated for about 10 minutes using a 500 W mercury lamp, and then the decomposition removal rate is calculated according to the following equation and is shown in FIG. 7. The decomposition removal rate is calculated as the concentration of the methylene blue in the aqueous solution, which may be obtained by measuring absorbance that is measured using UV-visible spectrophotometer (manufacturing company: Varian, model name: Cary-100 Conc).

$$\text{Decomposition removal rate} = (\text{initial concentration} - \text{residual concentration})/\text{initial concentration} * 100$$

Example 1 shows a higher decomposition removal rate compared to Comparative Examples 1 to 3.

While example embodiments have been disclosed herein, it should be understood that other variations may be possible. Such variations are not to be regarded as a departure from the scope of example embodiments of the present application, and all such modifications as would be obvious to one skilled in the art are intended to be included within the scope of the following claims.

**Claims**

1. A photocatalyst comprising:

   a porous metal oxide, the porous metal oxide being a divalent or multivalent metal oxide; and
   an oxygen vacancy-inducing metal commingled with the porous metal oxide, a first portion of the oxygen vacancy-inducing metal being dispersed within a lattice of the porous metal oxide, a second portion of the oxygen vacancy-inducing metal being exposed at a surface of the porous metal oxide, and an oxidation number of the oxygen vacancy-inducing metal being smaller than an oxidation number of the metal of the porous metal oxide.

2. The photocatalyst of claim 1, wherein the first portion of oxygen vacancy-inducing metal dispersed within the lattice of the porous metal oxide is in a form of a metal oxide, and the second portion of the oxygen vacancy-inducing metal exposed at the surface of the porous metal oxide is in a form of a metal.

3. The photocatalyst of claim 1 or 2, wherein the porous metal oxide is an oxide of at least one metal selected from the group consisting of Group 4, Group 5, Group 6, Group 8, Group 11, Group 12, Group 13, Group 14, and Group 15 elements.

4. The photocatalyst of claim 1 or 2, wherein the porous metal oxide is selected from $TiO_2$, $Nb_2O_5$ $Ta_2O_5$ $WO_3$, $Fe_2O_3$,

ZnO, SnO$_2$, Ce$_x$Zr$_{(1-x)}$O$_2$ (0≤x<1), or a combination thereof.

5. The photocatalyst of any of claims 1-4, wherein the oxygen vacancy-inducing metal is selected from Ti, V, Cr, Mn, Fe, Co, Ni, Cu, Zn, Ga, Ge, Zr, Nb, Ru, Rh, Pd, Ag, Cd, In, Sn, Ta, W, Ir, Pt, Au, Pb, Bi, or a combination thereof.

6. The photocatalyst of any of claims 1-5, wherein an amount of the first portion of the oxygen vacancy-inducing metal dispersed within the lattice of the porous metal oxide is 0.1 to 20 parts by weight, based on 100 parts by weight of the porous metal oxide.

7. The photocatalyst of any of claims 1-6, wherein an amount of the second portion of the oxygen vacancy-inducing metal exposed at the surface of the porous metal oxide is 0.05 to 10 parts by weight, based on 100 parts by weight of the porous metal oxide.

8. The photocatalyst of any of claims 1-7, wherein the porous metal oxide is TiO$_2$, and the oxygen vacancy-inducing metal is Pd.

9. A device for organic waste disposal including the photocatalyst of any of claims 1-8.

10. A method of manufacturing a photocatalyst, the method comprising:

   calcining a mixture including a porous metal oxide precursor and an oxygen vacancy-inducing metal precursor to form a calcined product; and
   reducing the calcined product to form a photocatalyst including a porous metal oxide and an oxygen vacancy-inducing metal.

11. The method of claim 10, further comprising:

   mixing the porous metal oxide precursor, the oxygen vacancy-inducing metal precursor, a structure-directing agent, and a solvent to form a mixed solution; and
   drying the mixed solution to form the mixture.

12. The method of claim 11, wherein the structure-directing agent is selected from a cationic surfactant, an anionic surfactant, a neutral surfactant, or a combination thereof.

13. The method of any of claims 10-12, wherein the porous metal oxide is a divalent or multivalent metal oxide, and an oxidation number of the oxygen vacancy-inducing metal is smaller than an oxidation number of the metal of the porous metal oxide.

14. The method of any of claims 10-12, wherein the oxygen vacancy-inducing metal precursor is an alkoxide, a halide, a nitrate, a hydrochloride, a sulfate, or an acetate of a transition element.

15. The method of any of claims 10-12, wherein the porous metal oxide precursor is an alkoxide, a halide, a nitrate, a hydrochloride, a sulfate, or an acetate of at least one metal selected from the group consisting of Group 4, Group 5, Group 6, Group 8, Group 11, Group 12, Group 13, Group 14, and Group 15 elements.

# FIG.1

oxygen located on the surface of the porous metal oxides

the oxygen vacancy inducing metal being partially exposed on the surface of the porous metal oxides

oxygen vacancy formed by the oxygen vacancy inducing metal included within the lattice of the porous metal oxides

the metal constituting the lattice of the porous metal oxides/Oxygen elements

the metal constituting the lattice of the porous metal oxides

the oxygen vacancy inducing metal included within the lattice of the porous metal oxides

the oxygen vacancy inducing metal/Oxygen elements

EP 2 476 485 A1

# FIG.2

$+ H_2O \longrightarrow 2 OH^*$

reactive oxygen

an absorbed oxygen molecule

$O_2$   $O_2^-$

$OH^*$   $H_2O$

$h^+$   $e^-$

organic material $+ OH^*$   $O_2^-$

$\downarrow$

$CO_2 + H_2O$

# FIG.3

- TiO$_2$ Anatase
- ▼ PdO
- ▪ Pd, metallic

Comparative example2

Comparative example1

Example1

Comparative example3
(Before reduction)

Comparative example3
(reduction)

20   30   40   50   60   70   90

EP 2 476 485 A1

FIG.4

FIG. 5

# FIG. 6

# FIG.7

## EUROPEAN SEARCH REPORT

Application Number

EP 11 19 0808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARAMENDIA ET AL: "Modification of the photocatalytic activity of Pd/TiO2 and Zn/TiO2 systems through different oxidative and reductive calcination treatments", APPLIED CATALYSIS B: ENVIRONMENTAL, ELSEVIER, AMSTERDAM, NL, vol. 80, no. 1-2, 24 November 2007 (2007-11-24), pages 88-97, XP022573696, ISSN: 0926-3373 * abstract * * "2.1. Synthesis of different titania-based systems"; page 89 * * "3.1. Case study 1: Pd containing system"; page 90 - page 94 * * page 90; table 1 * ----- | 1-15 | INV. B01J23/44 B01J35/00 B01J37/00 B01J37/04 B01J37/08 B01J37/18 B01J35/10 B01J21/06 |
| X | ADEL A. ISMAIL ET AL: "Palladium Doped Porous Titania Photocatalysts: Impact of Mesoporous Order and Crystallinity", CHEMISTRY OF MATERIALS, vol. 22, no. 1, 12 January 2010 (2010-01-12), pages 108-116, XP55028021, ISSN: 0897-4756, DOI: 10.1021/cm902500e * "Preparation of Pd/TiO2 Nanocomposites"; page 110, column 1 * * "Photocatalytic Activity Tests"; page 110, column 2 * ----- -/-- | 1-15 | **TECHNICAL FIELDS SEARCHED (IPC)** B01J C01G |

The present search report has been drawn up for all claims

| Place of search | Date of completion of the search | Examiner |
|---|---|---|
| The Hague | 24 May 2012 | Schmitt, Christian |

Europäisches
Patentamt

European
Patent Office

Office européen
des brevets

## EUROPEAN SEARCH REPORT

Application Number

EP 11 19 0808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARP O ET AL: "Photoinduced reactivity of titanium dioxide", PROGRESS IN SOLID STATE CHEMISTRY, PERGAMON PRESS, OXFORD, GB, vol. 32, no. 1-2, 1 January 2004 (2004-01-01), pages 33-177, XP004653735, ISSN: 0079-6786, DOI: 10.1016/J.PROGSOLIDSTCHEM.2004.08.001 * "5. Improving photocatalytic reactions"; page 73 - page 89 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 24 May 2012 | Schmitt, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)